# FASCICULE DE BREVET EUROPEEN

(11) **EP 1 554 810 B1**
(45) Date de publication et mention de la délivrance du brevet: **18.10.2006**
(21) Numéro de dépôt: 03809346.4
(22) Date de dépôt: 21.10.2003
(51) Int. Cl.: H03M 11/26, G01D 5/347, H03M 1/30, G01D 5/245, G01D 5/244

(54) **CODEUR ANGULAIRE OPTIQUE**
OPTISCHER WINKELCODIERER
OPTICAL ANGULAR ENCODER

(30) Priorité: 25.10.2002 FR 0213406
(43) Date de publication de la demande: 20.07.2005
(73) Titulaire: Thales, 92526 Neuilly Sur Seine (FR)
(72) Inventeur: BERTHOU, N.; c/o THALES Intellectual Property, F-94117 Arcueil (FR)
(74) Mandataire: Guérin, Michel
(86) Numéro de dépôt international: PCT/EP2003/050741
(87) Numéro de publication internationale: WO 2004/038925

(56) Documents cités:
- US-A- 5 014 215
- US-A- 5 386 220
- US-A- 6 097 319
- US-B1- 6 279 248

## Description

L'invention concerne les codeurs angulaires optiques fournissant des signaux logiques binaires représentant les incréments de rotation du codeur. Ces codeurs optiques sont utilisés à la manière de potentiomètres, par exemple pour la commande manuelle d'appareils électroniques sensibles à un paramètre d'entrée pouvant varier en continu ou presque en continu, mais ils sont beaucoup plus fiables que les potentiomètres. Typiquement, dans une application pour des équipements aéronautiques, on peut utiliser un codeur angulaire optique pour indiquer à un calculateur de pilotage automatique une consigne d'altitude ou de vitesse que le pilote choisit en actionnant un bouton de commande qui fait tourner le codeur. La fiabilité du codeur et des informations qu'il délivre est alors un élément essentiel du codeur.

On souhaite réaliser des codeurs précis, et fiables et dont le fonctionnement est sécurisé pour permettre que leur fonction de base soit assurée même en cas de panne de certains éléments qui les composent.

Un codeur angulaire optique est typiquement constitué par un disque portant des marques régulières, ce disque étant actionné en rotation par un bouton de commande (par exemple manuel). Une cellule photoélectrique fixée devant le disque détecte le défilement des marques successives lorsque le bouton de commande fait tourner le disque. Les marques sont typiquement des ouvertures dans un disque opaque, une diode luminescente étant placée d'un côté du disque et la cellule photoélectrique étant placée de l'autre côté.

Chaque passage de marque constitue un incrément d'une unité dans le comptage de la rotation du disque. La résolution angulaire est déterminée par le pas angulaire des marques régulièrement disposées sur un tour de disque. Pour détecter à la fois des incréments et des décréments d'angle de rotation lorsqu'on inverse le sens de rotation, on prévoit deux cellules photoélectriques décalées physiquement d'un nombre impair de quart de pas entre elles. Ainsi, les états logiques éclairée/non-éclairée des deux cellules sont codés sur deux bits qui prennent successivement les quatre valeurs successives suivantes 00, 01, 11, 10 lorsque le disque tourne dans un sens et les quatre valeurs successives suivantes 00, 10, 11, 01 lorsque le disque tourne dans l'autre, de sorte qu'il est facile de déterminer, non seulement l'apparition d'un incrément de rotation (changement d'état de l'un des bits) mais le sens de l'incrément (par comparaison entre un état des cellules et l'état immédiatement antérieur).

Pour augmenter la fiabilité des systèmes utilisant de tels codeurs, en particulier pour des applications aéronautiques, on a proposé de dédoubler le codeur ou au moins de dédoubler les cellules photoélectriques à l'intérieur du codeur. Ceci permet en partie de détecter des pannes telles que le non-fonctionnement d'une diode luminescente ou d'une diode de détection car on compare les états fournis par les deux cellules et on ne valide l'information d'incrémentation ou de décrémentation que si elle est fournie de manière identique par les deux codeurs ou les deux groupes de cellules photoélectriques du codeur. Si les informations ne sont pas identiques on conclut qu'une cellule au moins (diode luminescente ou diode de détection) est en panne et on invalide le comptage en donnant un signal d'indication d'erreur ou de panne.

Mais cette comparaison des signaux des deux groupes de cellules s'avère difficile car le positionnement du premier groupe de cellules doit être rigoureusement identique au positionnement du deuxième groupe : alors que le décalage d'un nombre impair de quart de pas des marques entre les deux cellules d'un même groupe peut être légèrement imprécis, il faut que le décalage entre les deux groupes de cellules soit très précisément un multiple du pas d'espacement des marques.

S'il n'en est pas ainsi, on aboutit à une situation dans laquelle les incrémentations ou décrémentations déterminées par les cellules ne se produisent pas rigoureusement au même moment. Certes les incréments et décréments seront détectés par les deux groupes de cellules, mais avec peut-être un très léger décalage dans le temps. Par conséquent, il devient possible que le calculateur, chargé de scruter les compteurs associés aux deux groupes de cellules pour contrôler la conformité des indications données par ces compteurs, trouve à un moment donné que les indications ne sont pas identiques alors que, s'il avait scruté un très court instant après, il aurait trouvé des indications identiques.

Pour résoudre ce problème on peut prévoir un délai de validation de la comparaison, c'est-à-dire que le calculateur ne fournit une indication d'erreur que si cette erreur persiste un certain temps. Mais le temps qu'il faut attendre est mal déterminé car il dépend de la vitesse de rotation du bouton. Pour une commande manuelle, le temps qu'il faut attendre serait plus long si l'utilisateur tourne le bouton plus lentement. On est conduit à différer l'indication de panne par exemple de deux secondes, ce qui n'est pas toujours acceptable. De plus cette méthode consiste à voir des pannes puisque le calculateur les détecte comme des pannes potentielles mais à les considérer comme des fausses pannes pendant un certain temps même si ce sont des vraies pannes. Cette solution n'est pas satisfaisante.

L'invention propose un moyen différent pour contrôler la fiabilité des informations fournies par le codeur angulaire optique double. Ce moyen consiste essentiellement à comparer non pas les états des cellules des deux groupes de cellules à un instant donné mais les séquences d'au moins quatre états successifs pris par les deux groupes de cellules avant cet instant et à valider les indications données par les deux groupes si la séquence pour un groupe est soit identique soit déphasée d'au plus un état, en avance ou en retard, par rapport à la séquence de l'autre groupe.

Le codeur permettant de mettre en oeuvre cette technique est un codeur angulaire optique incrémental double, comprenant au moins un disque portant des marques et deux paires de cellules de détection des marques, chaque paire de cellules fournissant un état logique constitué par une paire de niveaux logiques permettant la détermination d'un incrément de rotation +1 ou -1 lorsque le disque tourne, ce codeur étant caractérisé en ce qu'il comporte des moyens pour comparer (en principe périodiquement, par scrutation) une séquence de quatre états successifs S0, S1, S2, S3 pris par la première paire de cellules, à une séquence de quatre états successifs S'0, S'1, S'2, S'3 pris par la deuxième paire de cellules, les derniers états S3 et S'3 de ces séquences étant les états pris à l'instant où la comparaison est faite, et des moyens pour fournir une indication de comptage erroné si la séquence S'0, S'1, S'2, S'3 n'est pas égale à S0, S1, S2, S3 ou Sx, S0, S1, S2, ou S1, S2, S3, Sy, dans lesquels Sx représente un état antérieur de la première paire (état immédiatement antérieur à la séquence S0, S1, S2, S3) et Sy est un état possible de la première paire tel que l'incrément de passage de S3 à Sy ne soit pas supérieur à 1 en valeur absolue.

D'autres caractéristiques et avantages de l'invention apparaîtront à la lecture de la description détaillée qui suit et qui est faite en référence aux dessins annexés dans lesquels :
- la figure 1 représente schématiquement le principe d'un codeur angulaire optique simple de l'art antérieur ;
- la figure 2 représente les états logiques successifs possibles des cellules d'une paire lorsque le disque tourne ;
- la figure 3 représente le principe d'un codeur double avec contrôle d'une voie par l'autre ;
- la figure 4 représente un diagramme des évolutions des états des deux paires de cellules du codeur de la figure 3, dans le cas d'une rotation régulière ;
- la figure 5 et la figure 6 représentent des diagrammes temporels d'évolution d'états des paires de cellules ;
- la figure 7 représente l'architecture d'un codeur angulaire optique selon l'invention.

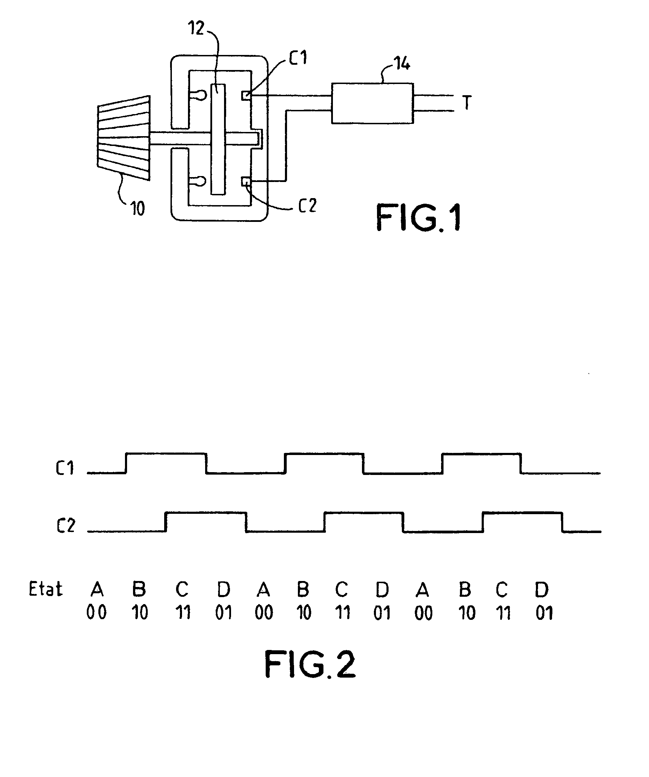

Sur la figure 1 est représenté schématiquement le principe d'un codeur angulaire optique simple. Le codeur comprend un bouton de commande 10 pouvant être tourné manuellement et qui entraîne un disque plan 12 portant des marques régulièrement espacées avec un pas angulaire P ; ces marques sont de préférence des ouvertures dans le disque, celui-ci étant opaque. La largeur des ouvertures est de préférence égale à l'espacement entre les ouvertures, donc P/2, dans le cas le plus intéressant où le codeur permet de coder en incrémentation et en décrémentation.

Une paire de cellules de détection optique C1, C2 est utilisée pour détecter le passage des marques au cours de la rotation du disque. Ces cellules C1, C2 sont espacées l'une de l'autre d'un nombre impair de demi-espacement entre marques, c'est-à-dire d'un multiple impair (2k+1)P/4 du quart du pas angulaire P, k étant un entier quelconque. Lorsque les marques sont des ouvertures dans le disque, on prévoit de préférence qu'une diode électroluminescente est placée en regard de chaque cellule, de l'autre côté du disque par rapport à la cellule, de sorte que le passage d'une ouverture devant la cellule éclaire fortement la cellule. La cellule fournit après amplification et écrêtage des signaux rectangulaire visibles sur la figure 2. La cellule C1 de la paire de cellules fournit des créneaux périodiques lors de la rotation régulière du disque. Ces créneaux ont une période T si le disque tourne à vitesse constante. La cellule C2 de la paire fournit des créneaux identiques mais déphasés de π/2 ou 3 π/2 en raison de son décalage physique (2k+1)P/4 par rapport à la cellule C1.

Il y a quatre états logiques possibles pour une paire de cellules, qui sont successivement, si le disque tourne dans le sens qui correspond aux créneaux de la figure 2,
Etat A : cellule C1 à 0, cellule C2 à 0 : 00
Etat B : cellule C1 à 1, cellule C2 à 0 : 10
Etat C : cellule C1 à 1, cellule C2 à 1 : 11
Etat D : cellule C1 à 0, cellule C2 à 1 : 01

Il n'y a pas d'autre état possible. On repasse à l'état A après l'état D. Ces états ne sont pas intéressants en eux-mêmes ; ce qui est intéressant c'est la transition d'un état à un autre : les transition de 00 à 10, de 10 à 11, de 11 à 01 et de 01 à 00 correspondent toutes à un incrément de +1, la transition de 00 à 01, de 01 à 11, de 11 à 10 et de 10 à 00 correspondent toutes à un incrément de -1, c'est-à-dire à une rotation unitaire en sens inverse.

Un décodeur simple 14 analyse ces transitions pour fournir un signal logique T ayant, en présence d'une rotation effective, deux valeurs logiques possibles correspondant l'une à un incrément de +1 l'autre à un incrément de -1. Le signal T peut comprendre deux bits, l'un indiquant qu'il y a rotation et l'autre indiquant le sens de rotation, incrémentation ou décrémentation. Ce signal T est appliqué à un compteur qui compte ou décompte en présence d'une rotation.

Le bouton de commande est pourvu de crans d'indexation pour éviter qu'il ne s'arrête dans une position où une cellule de détection n'est ni tout à fait devant une marque ni tout à fait entre deux marques.

Si on veut améliorer la fiabilité avec un codeur double, comprenant en principe un seul disque mais deux paires de cellules de détection indépendantes au lieu d'une, le codeur fournit alors un signal T et un signal T' représentant les incréments ou décréments successifs détectés à partir de chacune des paires de cellules. La deuxième paire de cellules C'1, C'2 est physiquement décalée par rapport à la première (C1, C2) d'un nombre entier de pas des marques du disque et par conséquent elle fournit au même moment exactement les mêmes transitions d'état.

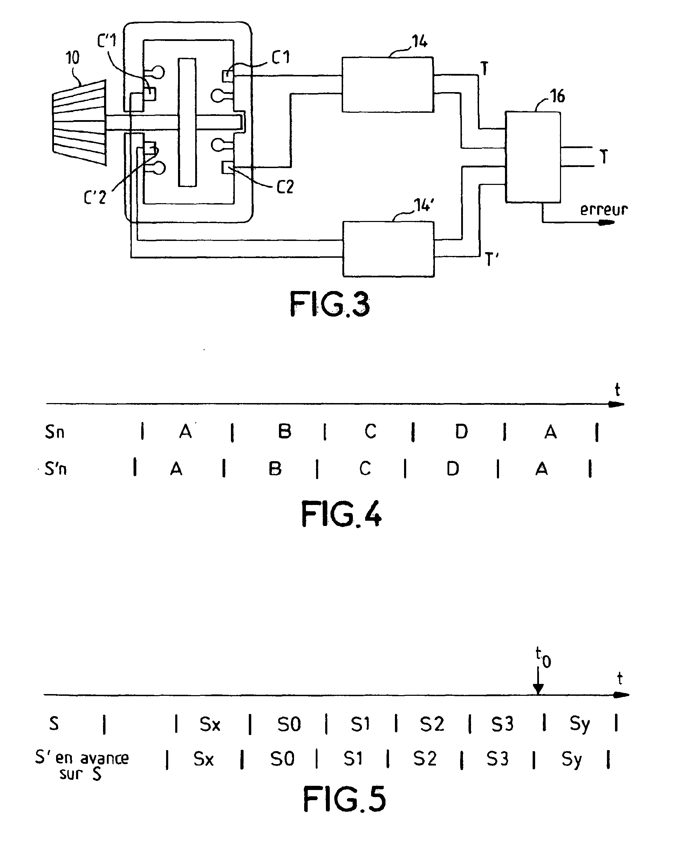

La figure 3 représente l'architecture de codeur qui en résulte : les signaux issus des paires de cellules sont traités séparément et aboutissent au calcul séparé des incréments T et T'. Ces incréments sont comparés dans un circuit de vérification 16 avant d'être envoyés au compteur qui détermine la position angulaire du bouton de commande. Si les incréments ne sont pas identiques, c'est qu'une des paires de cellules fonctionne anormalement et un signal d'erreur est émis.

Cependant, même lorsque les cellules fonctionnent normalement, la deuxième paire de cellules peut ne pas être exactement en phase avec la première par suite d'un léger décalage mécanique, les changements d'état logique des cellules des deux paires ne sont pas exactement synchrones. Il en résulte que si la vérification de l'identité des incréments est faite pendant l'instant où les paires de cellules ne fournissent pas des indications identiques, le circuit de consolidation risque de détecter une erreur alors qu'il s'agit d'un très léger défaut de positionnement mécanique.

La figure 4 représente l'évolution temporelle des signaux d'état qui sont dérivés de l'examen des signaux fournis par les paires de cellules C1, C2 et C'1, C'2 lors d'une rotation. Le signal Sn représente l'état A ou B ou C ou D de la paire de cellules C1, C2 au cours d'une rotation supposée à vitesse uniforme. Les barres verticales représentent les instants précis de changements d'état. Le signal S'n représente la même chose pour la paire de cellules C'1, C'2 au cours de la même rotation. S'il y a un décalage physique non rigoureusement égal à un multiple entier du pas des marques, entre les deux paires de cellules, les instants de changement d'état ne se produisent pas rigoureusement aux mêmes instants pour les deux paires de cellules bien qu'elles retrouvent des états identiques un très court instant après. Dans le cas représenté, le temps s'écoulant vers la droite, la paire de cellules C'1, C'2 est légèrement déphasée en avance par rapport à l'autre. Si la rotation s'effectuait dans l'autre sens, la paire de cellules C'1, C'2 serait en retard par rapport à la paire C1, C2.

Si le circuit de vérification 16 scrute l'identité des transitions entre T et T' à un instant situé pendant ce court déphasage et non pendant que les états Sn sont bien établis et identiques, une erreur risque d'être détectée.

Plutôt que d'établir une constante de temps pendant laquelle on supprime les différences de transition repérées, on propose selon l'invention d'observer les quatre derniers états des deux paires de cellules et procéder à une validation de l'incrémentation ou la décrémentation en fonction d'une comparaison de ces états.

On observe par conséquent la succession des états pris par la première paire de cellule. Soit S0, S1, S2, et S3 les quatre derniers états, S3 étant le dernier, correspondant à l'état pour lequel on veut effectuer une validation par comparaison avec l'autre paire de cellules.

Si les cellules de la deuxième paire sont parfaitement en phase mécaniquement avec celles de la première paire, la succession des quatre derniers états S'0, S'1, S'2, S'3 pris par la deuxième paire au même instant (S'3 étant l'état au même instant T) est rigoureusement identique à la succession S0, S1, S2, S3 quel que soit l'instant de la comparaison. C'est la situation idéale.

Si un léger déphasage a lieu, dans une configuration telle que celle de la figure 4, la situation sera la même pour n'importe quel instant de comparaison sauf dans le cas exceptionnel où cet instant se situe pendant le court déphasage où les états des paires de cellules sont momentanément différents.

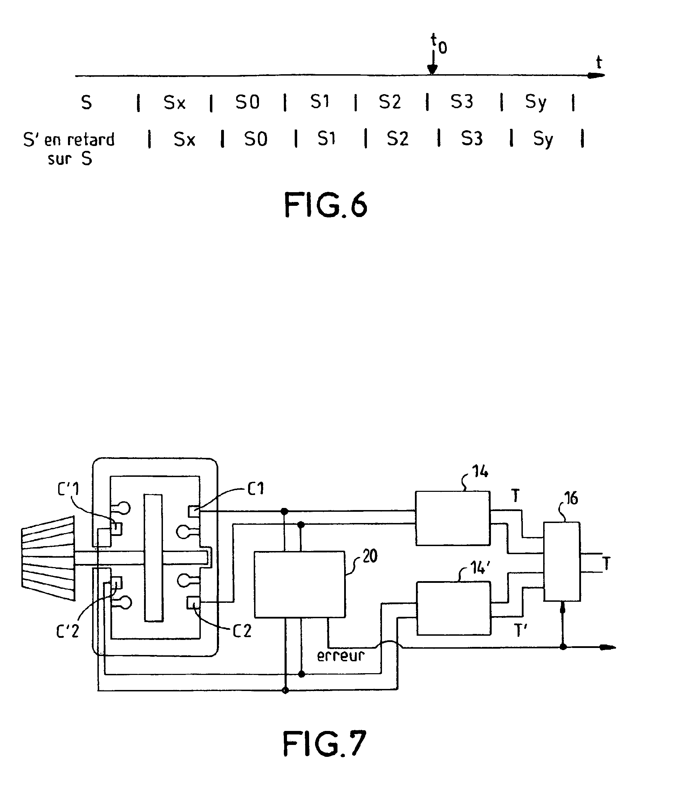

Les figures 5 et 6 représentent une succession d'états Sx, S0, S1, S2, S3, Sy, pris par les deux paires de cellules, dans deux configurations différentes de déphasage entre cellules et à des instants d'observation t0 différents dans les deux configurations mais tous deux pris pendant que la paire de cellules C1, C2 est dans l'état S3.

La figure 5 représente le cas où la paire de cellules C'1, C'2 fournissant l'état S' est très légèrement en avance de phase et l'instant d'observation t0 se situe exceptionnellement tout à fait à la fin de l'état S3, à un moment où S' a déjà basculé de sa valeur S3 vers une nouvelle valeur Sy alors que S ne l'a pas encore fait du fait du léger déphasage. La valeur Sy dépend bien entendu du fait que la rotation se poursuit ou s'arrête ou s'inverse. Sy ne peut avoir que l'une des trois valeurs suivantes : Sy = S3 (rotation interrompue) ; ou Sy différent de S3 d'un incrément + 1 ; ou Sy différent de S3 d'un incrément -1.

Dans ce cas, la séquence des quatre derniers états de S' avant l'instant t0 est S1, S3, S3, Sy alors que la séquence des quatre derniers états de S au même instant est S0, S1, S2, S3.

La figure 6 représente le cas inverse où la paire de cellules C'1, C'2 est légèrement en retard par rapport à la paire C1, C2, et l'instant d'observation t0 se trouve exceptionnellement tout à fait au début de l'état S3, alors que S' n'a pas encore basculé dans cet état S3 du fait du léger déphasage.

La séquence des quatre derniers états pris par la paire de cellules C'1, C'2 avant l'instant d'observation t0 est alors Sx, S0, S1, S2 alors que la succession des états S est S0, S1, S2, S3.

Par conséquent, si les deux paires de cellules fonctionnent normalement, la succession des états pris par la deuxième paire pour une succession S0, S1, S2, S3 prise par la première paire sera :
- en général S0, S1, S2, S3, qu'il y ait ou non un léger déphasage entre les paires,
- exceptionnellement S1, S2, S3, Sy mais dans ce cas Sy ne peut différer de S3 que de un incrément positif ou négatif au plus ;
- ou exceptionnellement Sx, S0, S1, S2 où Sx est l'état précédent S0 et ne peut également différer de S0 que de 0 ou +1 ou -1.

On prévoit donc selon l'invention que le circuit de vérification 16 comporte des moyens pour comparer à un instant t0 la séquence de quatre états successifs S0, S1, S2, S3 pris par la première paire de cellules avant cet instant, à la une séquence de quatre états successifs S'0, S'1, S'2, S'3 pris par la deuxième paire de cellules avant le même instant. Ce circuit fournit une indication de comptage erroné si la séquence S'0, S'1, S'2, S'3 n'est pas égale à S0, S1, S2, S3 ou Sx, S0, S1, S2, ou S1, S2, S3, Sy, dans lesquels Sx ne peut pas différer de S0 de plus d'une unité, et Sy ne peut pas différer de S3 de plus d'une unité.

La figure 7 représente le codeur selon l'invention. Un circuit de vérification 20, qui peut être ajouté ou substitué au circuit de vérification 16, reçoit directement les états des paires de cellules. Il mémorise systématiquement au moins les quatre derniers états de chaque paire de cellules et ne valide une transition T à destination du compteur que si les séquences de quatre états sont conformes à ce qui a été dit ci-dessus ; sinon il envoie un signal d'erreur.

Pour vérifier si la séquence d'états pris par la deuxième paire est Sx, S0, S1, S2 on peut utiliser comme valeur de Sx soit la vraie valeur qui a été prise effectivement par la paire de cellules, mais alors il faut la mémoriser en plus des quatre états pris par la paire de cellules : on mémorise dans ce cas cinq états successifs. Ou alors, on ne mémorise pas le cinquième état mais on ne valide la transition que si Sx ne diffère pas de S0 de plus d'une unité.

## Revendications

1. Codeur angulaire optique incrémental double, comprenant au moins un disque portant des marques et deux paires de cellules C1, C2 ; C'1, C'2) de détection des marques, chaque paire de cellules fournissant un état logique constitué par une paire de niveaux logiques permettant la détermination d'un incrément de rotation +1 ou -1 lorsque le disque tourne, ce codeur étant **caractérisé en ce qu'**il comporte des moyens pour comparer à un instant donné une séquence de quatre états successifs S0, S1, S2, S3 pris par la première paire de cellules, à une séquence de quatre états successifs S'0, S'1, S'2, S'3 pris par la deuxième paire de cellules, les derniers états S3 et S'3 de ces séquences étant les états pris à l'instant où la comparaison est faite, et des moyens pour fournir une indication de comptage erroné si la séquence S'0, S'1, S'2, S'3 n'est pas égale à S0, S1, S2, S3 ou Sx, S0, S1, S2, ou S1, S2, S3, Sy, dans lesquels Sx représente un état antérieur de la première paire et Sy est un état possible de la première paire tel que l'incrément de passage de S3 à Sy ne soit pas supérieur à 1 en valeur absolue.

2. Codeur angulaire selon la revendication 1, **caractérisé en ce que** les moyens pour comparer comportent des moyens pour vérifier si la séquence prise par la deuxième paire de cellules est égale à Sx, S0, S1, S2, dans laquelle Sx est l'état de la première cellule immédiatement antérieur à S0, et ces moyens comportent à cet effet des moyens pour mémoriser une séquence d'états de la première paire de cellules comportant les cinq états antérieurs au moment auquel la comparaison est faite.

3. Codeur angulaire selon la revendication 1, **caractérisé en ce que** les moyens pour comparer comportent des moyens pour vérifier si la séquence prise par la deuxième paire de cellules est égale à Sx, S0, S1, S2, où Sx est un état quelconque qui diffère de l'état S0 d'au plus une unité.

4. Procédé pour sécuriser le fonctionnement d'un codeur angulaire optique double comportant deux paires de cellules de détection de marques sur un disque, ces paires de cellules fournissant des états logiques dont la succession détermine des incréments de rotation du codeur, ce procédé étant **caractérisé en ce qu'**on compare à un instant donné les séquences de quatre états successifs pris par les deux paires de cellules avant cet instant et on valide les indications de transition données par les deux paires si la séquence de quatre états pour une paire est soit identique à la séquence de l'autre paire, soit déphasée d'au plus un état, en avance ou en retard, par rapport à la séquence de l'autre paire.

## Claims

1. Dual incremental optical angular encoder, comprising at least one disc bearing marks and two pairs of cells (C1, C2; C'1, C'2) for detecting marks, each pair of cells providing a logic state consisting of a pair of logic levels allowing the determination of an increment of rotation +1 or -1 when the disc revolves, this encoder being **characterized in that** it comprises means for comparing at a given instant a sequence of four successive states S0, S1, S2, S3 taken by the first pair of cells, with a sequence of four successive states S'0, S'1, S'2, S'3 taken by the second pair of cells, the last states S3 and S'3 of these sequences being the states taken at the instant at which the comparison is made, and means for providing an indication of erroneous counting if the sequence S'0, S'1, S'2, S'3 is not equal to S0, S1, S2, S3 or Sx, S0, S1, S2, or S1, S2, S3, Sy, in which Sx represents a prior state of the first pair and Sy is a possible state of the first pair such that the increment in passing from S3 to Sy is not greater than 1 in absolute value.

2. Angular encoder according to Claim 1, **characterized in that** the means for comparing comprise means for verifying whether the sequence taken by the second pair of cells is equal to Sx, S0, S1, S2, in which Sx is the state of the first cell immediately prior to S0, and these means comprise for this purpose means for storing a sequence of states of the first pair of cells comprising the five states prior to the moment at which the comparison is made.

3. Angular encoder according to Claim 1, **characterized in that** the means for comparing comprise means for verifying whether the sequence taken by the second pair of cells is equal to Sx, S0, S1, S2 where Sx is any state which differs from the state S0 by at most one unit.

4. Method for ensuring the security of operation of a dual optical angular encoder comprising two pairs of cells for detecting marks on a disc, these pairs of cells providing logic states whose succession determines increments of rotation of the encoder, this method being **characterized in that** at a given instant the sequences of four successive states taken by the two pairs of cells before this instant are compared and the transition indications given by the two pairs are validated if the sequence of four states for a pair is either identical to the sequence of the other pair, or phase-offset by at most one state, ahead or behind, with respect to the sequence of the other pair.

## Patentansprüche

1. Doppelter optischer inkrementaler Winkelcodierer, der mindestens eine Markierungen tragende Scheibe und zwei Paare von Zellen (C1, C2; C'1, C'2) zur Markierungserfassung aufweist, wobei jedes Paar von Zellen einen logischen Zustand liefert, der aus einem Paar von logischen Pegeln besteht, die die Bestimmung eines Drehinkrements +1 oder -1 ermöglichen, wenn die Scheibe sich dreht, wobei dieser Codierer **dadurch gekennzeichnet ist, dass** er Mittel, um in einem gegebenen Zeitpunkt eine Folge von vier aufeinanderfolgenden Zuständen S0, S1, S2, S3, die vom ersten Paar von Zellen genommen werden, mit einer Folge von vier aufeinanderfolgenden Zuständen S'0, S'1, S'2, S'3 zu vergleichen, die vom zweiten Paar von Zellen genommen werden, wobei die letzten Zustände S3 und S'3 dieser Folgen die Zustände sind, die in dem Zeitpunkt genommen werden, in dem der Vergleich durchgeführt wird, und Mittel aufweist, um eine Anzeige des fehlerhaften Zählens zu liefern, wenn die Folge S'0, S'1, S'2, S'3 nicht gleich S0, S1, S2, S3 oder Sx, S0, S1, S2, oder S1, S2, S3, Sy ist, wobei Sx einen vor dem ersten Paar liegenden Zustand darstellt, und Sy ein derartiger möglicher Zustand des ersten Paars ist, dass das Inkrement des Übergangs von S3 nach Sy im Absolutwert nicht größer als 1 ist.

2. Winkelcodierer nach Anspruch 1, **dadurch gekennzeichnet, dass** die Vergleichsmittel Mittel aufweisen, um zu überprüfen, ob die vom zweiten Paar von Zellen genommene Folge gleich Sx, S0, S1, S2 ist, wobei Sx der Zustand der ersten Zelle direkt vor S0 ist, und diese Mittel zu diesem Zweck Mittel aufweisen, um eine Folge von Zuständen des ersten Paars von Zellen zu speichern, die die fünf Zustände enthält, die vor dem Moment liegen, in dem der Vergleich durchgeführt wird.

3. Winkelcodierer nach Anspruch 1, **dadurch gekennzeichnet, dass** die Vergleichsmittel Mittel aufweisen, um zu überprüfen, ob die vom zweiten Paar von Zellen genommene Folge gleich Sx, S0, S1, S2 ist, wobei Sx ein beliebiger Zustand ist, der sich von dem Zustand von S0 um höchstens eine Einheit unterscheidet.

4. Verfahren zur Sicherung des Betriebs eines doppelten optischen Winkelcodierers, der zwei Paare von Zellen zur Erfassung von Markierungen auf einer Scheibe aufweist, wobei diese Paare von Zellen logische Zustände liefern, deren Aufeinanderfolge Drehinkremente des Codierers bestimmt, wobei dieses Verfahren **dadurch gekennzeichnet ist, dass** in einem gegebenen Zeitpunkt die Folgen von vier aufeinanderfolgenden Zuständen verglichen werden, die von den zwei Paaren von Zellen vor diesem Zeitpunkt genommen wurden, und die von den beiden Paaren gegebenen Übergangsanzeigen validiert werden, wenn die Folge von vier Zuständen für ein Paar entweder gleich der Folge des anderen Paars oder um höchstens einen Zustand vorher oder nachher bezüglich der Folge des anderen Paars phasenverschoben ist.
